(19) Europäisches Patentamt

European Patent Office

Office européen des brevets

(11) **EP 0 605 710 B1**

(12) **FASCICULE DE BREVET EUROPEEN**

(45) Date de publication et mention
de la délivrance du brevet:
**03.07.1996 Bulletin 1996/27**

(21) Numéro de dépôt: **93917827.3**

(22) Date de dépôt: **26.07.1993**

(51) Int Cl.⁶: **G01M 11/00**

(86) Numéro de dépôt international:
**PCT/FR93/00763**

(87) Numéro de publication internationale:
**WO 94/02823 (03.02.1994 Gazette 1994/04)**

(54) **SYSTEME INTERFEROMETRIQUE DE DETECTION ET DE LOCALISATION DE DEFAUTS REFLECTEURS DE STRUCTURES GUIDANT LA LUMIERE**

System zur interferometrischen Detektion und Lokalisierung von reflektierenden Defekten in Lichtleiterstrukturen

INTERFEROMETRIC SYSTEM FOR SENSING AND LOCATING REFLECTIVE DEFECTS IN LIGHT-CONDUCTING STRUCTURES

(84) Etats contractants désignés:
**DE FR GB**

(30) Priorité: **27.07.1992 FR 9209225**

(43) Date de publication de la demande:
**13.07.1994 Bulletin 1994/28**

(73) Titulaire: **FRANCE TELECOM
75015 Paris (FR)**

(72) Inventeurs:
- **BOISROBERT, Christian
  F-22700 Perros-Guirec (FR)**
- **LUCAS, Jean-François
  F-22300 Lannion (FR)**
- **DONTENWILLE, Michel
  F-22300 Lannion (FR)**

(74) Mandataire: **Dubois-Chabert, Guy et al
c/o BREVATOME
25, rue de Ponthieu
75008 Paris (FR)**

(56) Documents cités:
- **ELECTRONICS LETTERS. vol. 21, no. 18, Août 1985, ENAGE GB pages 781 - 783 M. TSUBOKAWA ET AL 'Chromatic Dispersion Measurement of a SM Fibre by Optical Heterodyne Interferometry.**
- **PATENT ABSTRACTS OF JAPAN vol. 14, no. 156 (E-908)26 Mars 1990 & JP-A-20 15 685 ( YOKOGAWA ELECTRIC CORP.) 19 Janvier 1990.**

## Description

La présente invention concerne un système interférométrique de détection et de localisation de défauts réflecteurs de structures guidant la lumière.

Par "structures guidant la lumière", on entend des guides d'ondes optiques comme par exemple les fibres optiques, les coupleurs optiques, et même les lasers.

La présente invention s'applique notamment au domaine des télécommunications optiques et permet la localisation de dioptres faiblement réfléchissants dans de tels guides optiques, avec une grande résolution.

L'invention permet aussi de mesurer des caractéristiques de transmission de tels guides optiques ainsi que des coefficients de réflexion de structures guidantes passives ou actives.

On connaît déjà par le document suivant :

High-spatial-resolution and high-sensitivity interferometric optical-time-domain reflectometer, Masaru Kobayashi, Juichi Noda, Kazumasa Takada and Henry F. Taylor, Proc. SPIE Conference, Orlando, Florida, Avril 1-5, 1991, vol. 1474 p. 278 - 284

un système interférométrique de détection et de localisation de défauts réflecteurs.

La présente invention résout le problème de l'obtention d'un système interférométrique apte à définir avec une grande précision la position "d'accidents" de propagation répartis le long de guides optiques.

Pour ce faire, la présente invention utilise un interféromètre du type Michelson en lumière incohérente ainsi que des moyens interférométriques avec comptage de franges d'interférences par laser.

De façon précise, la présente invention a pour objet un système interférométrique de détection et de localisation de défauts réflecteurs d'une structure guidant la lumière, ce système étant caractérisé en ce qu'il comprend :

- une source de lumière incohérente,
- une source laser monomode dont la longueur d'onde est sensiblement égale à la longueur d'onde centrale de la source incohérente,
- des premier et deuxième coupleurs optiques dont des premières branches respectives sont optiquement couplées à la source incohérente et à la source laser,
- un premier support qui est déplacable en translation suivant une direction donnée et auquel sont fixés les extrémités de deuxièmes branches des premier et deuxième coupleurs,
- un deuxième support apte à osciller suivant la direction donnée,
- des premier et deuxième réflecteurs de lumière fixés au deuxième support et placés respectivement en regard des extrémités des deuxièmes branches des premier et deuxième coupleurs pour y renvoyer la lumière qui en sort,
- un troisième support qui est déplaçable en translation suivant la direction donnée et auquel est fixée l'extrémité d'une troisième branche du deuxième coupleur,
- un troisième réflecteur de lumière qui est fixe et placé en regard de cette extrémité de la troisième branche du deuxième coupleur pour y renvoyer la lumière qui en sort, une troisième branche du premier coupleur étant optiquement couplée à la structure guidante,
- des premier et deuxième photodétecteurs qui sont respectivement couplés optiquement à des quatrième branches des premier et deuxième coupleurs,
- un compteur de franches d'interférences dont l'entrée reçoit les signaux fournis par le deuxième photodétecteur, et
- des moyens d'analyse des signaux fournis par les premier et deuxième photodétecteurs, ces moyens d'analyse étant prévus pour localiser les défauts réflecteurs de la structure guidante, à l'aide de déplacements appropriées des premier, deuxième et troisième supports et du compteur.

La présente invention permet également, en utilisant un traitement de signal par corrélation, d'abaisser le seuil de détection, ou "puissance minimum détectable", d'au moins une décade par rapport au système connu mentionné plus haut, sans affecter la résolution spatiale.

Le système objet de la présente invention peut comprendre en outre un troisième coupleur optique dont des première et deuxième branches sont respectivement couplées optiquement à la source incohérente et à la source-laser et dont des troisième et quatrième branches sont respectivement couplées optiquement aux premières branches des premier et deuxième coupleurs.

Selon un mode de réalisation particulier du système objet de l'invention, les moyens d'analyse comprennent un oscilloscope à deux voies qui reçoivent respectivement les signaux fournis par les premier et deuxième photodétecteurs, cet oscilloscope étant prévu pour afficher les interférogrammes correspondant à ces signaux.

Le système objet de l'invention peut comprendre en outre des moyens piézoélectriques qui sont aptes à faire osciller le deuxième support suivant la direction donnée.

Selon un mode de réalisation préféré du système objet de l'invention, ce système comprend en outre des moyens de régulation de la vitesse du déplacement du deuxième support, ces moyens de régulation étant prévus pour imposer une vitesse de déplacement constante au deuxième support.

Ces moyens de régulation peuvent comprendre :

- un interféromètre de Michelson comportant :

  . une source lumineuse dont la longueur de cohérence est supérieure à l'amplitude du déplacement du deuxième support,

. deux bras respectivement terminés par deux réflecteurs de lumière dont l'un est rendu rigidement solidaire du deuxième support, et

. un troisième photodétecteur, et

- des moyens de commande des moyens piézoélectriques en fonction du signal fourni par ce troisième photodétecteur, ces moyens de commande étant prévus pour imposer la vitesse de déplacement constante au deuxième support par l'intermédiaire des moyens piézoélectriques.

La présente invention sera mieux comprise à la lecture de la description d'exemples de réalisation donnés ci-après à titre purement indicatif et nullement limitatif, en faisant référence aux dessins annexés sur lesquels :

- la figure 1 est une vue schématique d'un mode de réalisation particulier du système objet de la présente invention,
- la figure 2 est un interférogramme qui est obtenu grâce au système de la figure 1 et qui correspond à un dioptre faiblement réfléchissant,
- la figure 3 représente un autre interférogramme obtenu avec une source laser que comporte ce système,
- la figure 4 est une vue schématique et partielle de moyens de régulation de la vitesse du déplacement d'une platine du système représenté sur la figure 1,
- la figure 5 illustre schématiquement des moyens électroniques faisant partie de ces moyens de régulation, et
- les figures 6A à 6C illustrent schématiquement la possibilité de déplacer un interférogramme sur l'écran d'un oscilloscope que comporte le système de la figure 1.

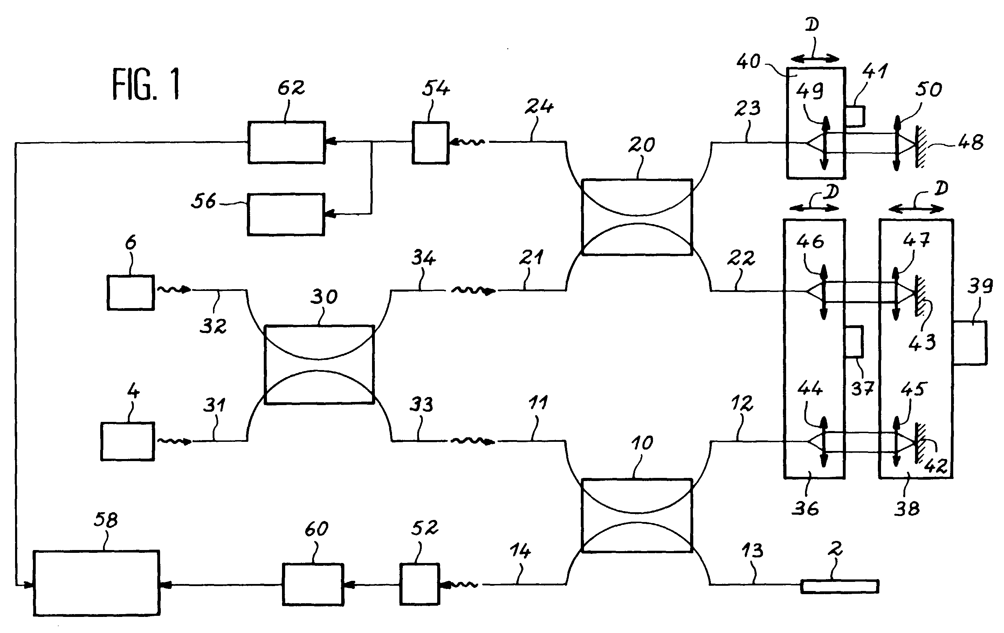

La système interférométrique conforme à l'invention, qui est schématiquement représenté sur la figure 1, est destiné à détecter et localiser un ou plusieurs défauts réflecteurs qu'un guide d'ondes optiques 2 est susceptible de comporter.

Ceci système comprend une source de lumière incohérente 4 constituée par un émetteur à diode électroluminescente à spectre optique large ainsi qu'un émetteur laser monomode 6 dont la longueur d'onde est sensiblement égale à la longueur d'onde centrale de la source incohérente 4.

Le système de la figure 1 comprend également trois coupleurs optiques 10, 20 et 30 de type "2 x 2", à fibres optiques monomodes.

Chaque coupleur optique comporte quatre branches en fibres optiques qui, pour le coupleur 10, portent les références 11, 12, 13 et 14, pour le coupleur 20, les références 21, 22, 23 et 24 et, pour le coupleur 30, les références 31, 32, 33 et 34.

Le système de la figure 1 comprend également trois supports respectivement constitués par une platine 36 déplaçable en translation parallèlement à une direction donnée D, une platine 38 apte à osciller suivant cette direction D et une platine 40 déplaçable en translation suivant cette direction D.

Les platines 36 et 40 sont respectivement associées à des moteurs 37 et 41 qui permettent leur translation suivant la direction D et la platine 38 est associée à des moyens piézoélectriques 39 qui sont aptes à faire osciller cette platine 38 suivant cette direction D.

Les extrémités des fibres optiques 12 et 22, appartenant respectivement aux coupleurs 10 et 20, sont fixées, parallèlement à la direction D, sur la platine 36.

De même, une extrémité de la fibre optique 23, appartenant au coupleur 20, est fixée, parallèlement à cette direction D, sur la platine 40.

Sur la platine 38, qui suit la platine 36 et qui se trouve en regard de cette dernière, sont montés des réflecteurs de lumière 42 et 43, respectivement en regard des extrémités des fibres 12 et 22.

Ces réflecteurs de lumière 42 et 43 sont prévus pour réfléchir des faisceaux lumineux sortant de ces fibres 12 et 22 afin que ces faisceaux retournent dans ces fibres.

Des optiques 44 et 45 sont respectivement fixées sur les platines 36 et 38, l'optique 44 étant placée en regard de l'extrémité de la fibre 12 et l'optique 45 en regard du réflecteur 42, afin qu'un faisceau lumineux issu de la fibre 12 soit transformé en un faisceau à rayons parallèles par l'optique 44 et que ce dernier faisceau soit focalisé sur le réflecteur 42 par l'optique 45, ce faisceau retournant alors dans la fibre optique 12 par l'intermédiaire de ces optiques 45 et 44.

De même, des optiques 46 et 47 sont respectivement fixées sur les platines 36 et 38, l'optique 46 étant placée en regard de l'extrémité de la fibre optique 22 et l'optique 47 en regard du réflecteur de lumière 43, l'optique 46 transformant un faisceau lumineux issu de la fibre 22 en un faisceau à rayons parallèles qui est focalisé sur le réflecteur de lumière 43 par l'optique 47, ce faisceau étant réfléchi par le réflecteur 43 et retournant dans la fibre optique 22 par l'intermédiaire de l'optique 47 puis de l'optique 46.

En regard de la platine 40 se trouve un réflecteur de lumière 48 qui est fixe.

Le réflecteur 48 se trouve plus précisément en regard de l'extrémité de la fibre 23, qui est fixée à la platine 40.

Ce réflecteur 48 est prévu pour réfléchir un faisceau lumineux issu de cette extrémité de la fibre 23 afin que ce faisceau retourne dans cette fibre.

Une optique 49 est fixée sur la platine 40 en regard de cette extrémité de la fibre 23 pour transformer un faisceau lumineux issu de cette dernière en un faisceau à rayons parallèles.

Une optique 50 est placée en regard du réflecteur 48 et fixe par rapport à ce dernier, afin de focaliser ce faisceau à rayons parallèles sur ce réflecteur 48 pour qu'il retourne dans l'extrémité de la fibre 23 par l'intermédiaire de l'optique 50 puis de l'optique 49.

Le système représenté sur la figure 1 comprend également deux photodétecteurs 52 et 54 qui sont respectivement couplés optiquement aux extrémités des fibres 14 et 24 appartenant aux coupleurs 10 et 20.

Ainsi, le photodétecteur 52 fournit un signal électrique lorsqu'il reçoit un faisceau lumineux issu de la fibre optique 14 et le photodétecteur 54 fournit un signal électrique lorsqu'il reçoit un faisceau lumineux issu de la fibre optique 24.

De plus, comme on le voit sur la figure 1, les fibres 31 et 32 sont respectivement couplées optiquement à la source incohérente 4 et à la source laser 6, l'extrémité de la fibre optique 13 du coupleur 10 est optiquement couplée à une extrémité du guide optique 2 et les extrémités des fibres 11 et 21 des coupleurs 10 et 20 sont respectivement couplées optiquement aux extrémités des fibres optiques 33 et 34 du coupleur 30 de façon que des faisceaux lumineux se propageant dans ces extrémités des fibres 33 et 34 puissent passer respectivement dans les fibres 11 et 21 des coupleurs 10 et 20.

Le système de la figure 1 comprend également un compteur de franges d'interférence 56 dont l'entrée est reliée à la sortie du photodétecteur 54 ainsi qu'un oscilloscope numérique 58 à deux voies, dont une première voie reçoit le signal de sortie du photodétecteur 52, par l'intermédiaire d'un amplificateur 60, et dont la deuxième voie reçoit le signal de sortie du photodétecteur 54 par l'intermédiaire d'un amplificateur 62.

Le coupleur 30 envoie une moitié de l'intensité lumineuse qui lui parvient de la source incohérente 4 et/ou de l'émetteur laser 6 vers la fibre 11 et l'autre moitié de cette intensité vers la fibre 21.

Le coupleur optique 10, qui est un élément essentiel du système interférométrique schématiquement représenté sur la figure 1, joue le rôle de la lame séparatrice d'un interféromètre de Michelson.

Ce coupleur 10, lorsqu'il reçoit un rayonnement par sa fibre 11, envoie une moitié de ce rayonnement vers la fibre 12 et l'autre moitié vers la fibre 13 puis mélange le rayonnement provenant du réflecteur 42, qui lui parvient par la fibre 12, et le rayonnement qui est réfléchi par un ou plusieurs défauts réflecteurs du guide 2 et qui lui parvient par la fibre 13, pour envoyer ces rayonnements mélangés vers le photodétecteur 52.

Le coupleur optique 20 joue également le rôle de la lame séparatrice d'un deuxième interféromètre de type Michelson.

Ce coupleur 20 reçoit un rayonnement par sa fibre 21 et envoie une moitié de ce rayonnement vers la fibre 22 et l'autre moitié du rayonnement vers la fibre 23.

Le coupleur 20 mélange les rayonnements respectivement réfléchis par les réflecteurs 43 et 48 et lui parvenant par l'intermédiaire de ces fibres 22 et 23 pour envoyer les rayonnements ainsi mélangés vers le photodétecteur 54.

Au départ, on ignore si un dioptre réflecteur se trouve dans le guide optique 2.

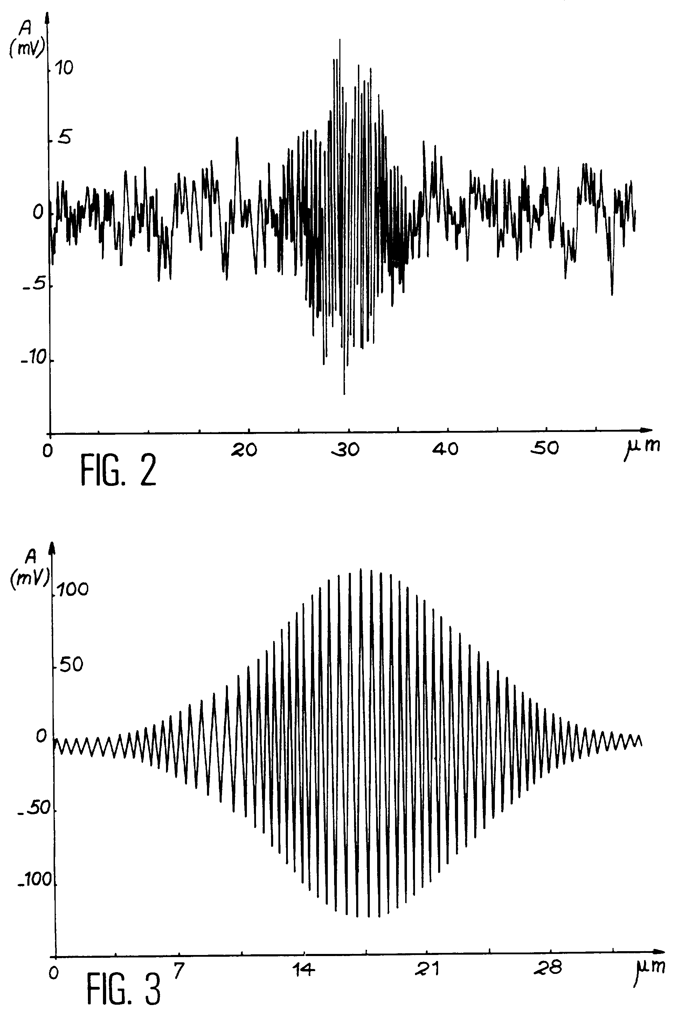

Si un tel dioptre réflecteur existe, le photodétecteur 52 signalera sa présence en fournissant des signaux électriques conduisant à un interférogramme du genre de celui de la figure 2 sur l'oscilloscope 58 (voie 1).

Un tel interférogramme est obtenu en faisant varier la distance entre l'extrémité de la fibre 12, qui est fixée à la platine 36, et le réflecteur 42.

L'interférogramme de la figure 2, qui correspond à un dioptre dont le coefficient de réflexion est faible, est tracé dans un repère dont l'axe des ordonnées correspond à des amplitudes de réflexion A et dont l'axe des abcisses correspond à une distance parcourue par la platine 38 (exprimée en micromètres).

L'amplitude maximum de cet interférogramme correspond à l'égalité entre la longueur optique du bras du premier interféromètre de Michelson, bras qui est terminé par le réflecteur de lumière 42, et la longueur optique du bras de cet interféromètre, qui est terminé par le dioptre réflecteur du guide 2.

Si le guide 2 comporte plusieurs dioptres réflecteurs, on obtiendra bien entendu plusieurs interférogrammes les uns à la suite des autres.

La forme et l'amplitude de chaque interférogramme dépend du spectre optique de la source incohérente 4 utilisée pour réaliser ces interférogrammes et dépend aussi des caractéristiques optiques du dioptre réflecteur ainsi que de la vitesse de déplacement du réflecteur de lumière 42 par rapport à l'extrémité de la fibre optique 12.

Si l'on fait une analyse harmonique en transformée de Fourier de l'interférogramme de la figure 2, une composante à la fréquence Fo (fréquence porteuse des interférogrammes) indique la présence d'un dioptre réflecteur, ou centre réflecteur, avec une qualité de signal qui est meilleure que dans le cas de la figure 2.

On remarquera en effet que tous les interférogrammes "contiennent" une fréquence porteuse voisine de Fo et qu'il suffit d'aller à la recherche de tous les signaux spectralement centrés sur Fo dans le photocourant fourni par le photodétecteur 52 pour trouver tous les dioptres réflecteurs.

Cette fréquence Fo est également la fréquence porteuse des interférogrammes fournis par le photodétecteur 54 puisque ces derniers interférogrammes sont produits au cours de translations identiques du réflecteur 42 et du réflecteur 43.

En effet, les réflecteurs 42 et 43 sont fixés sur la même platine 38, qui est mise en mouvement à l'aide des moyens piézoélectriques 39, et se déplacent donc toujours à la même vitesse et sur la même distance.

Le déplacement de la platine 36 est contrôlé par comptage de franges à l'aide du photodétecteur 54 dans le deuxième interféromètre de Michelson, lorsque l'émetteur laser 6 est utilisé comme source lumineuse.

On voit sur la figure 3 un interférogramme obtenu sur l'oscilloscope 58 (voie 2) à l'aide du photodétecteur 54, lorsque l'émetteur laser 6 est utilisé comme source lumineuse, interférogramme à partir duquel on est capable de connaître la fréquence Fo des franges d'interférence qui est la fréquence porteuse des interférogrammes.

Le système de collimation, qui est formé par l'extrémité de la fibre 23 et l'optique 49, est maintenu fixe pendant les déplacements de la platine 36.

Lorsque cette platine 36 occupe la position dans laquelle les bras du premier interféromètre respectivement terminés par le réflecteur 42 et le dioptre réflecteur du guide 2 ont la même longueur optique (voir plus haut), la platine 40 est mise en mouvement et le photodétecteur 54 reprend son comptage de franges pour contrôler ce mouvement, jusqu'à ce que la platine 40 atteigne une position dans laquelle les longueurs optiques respectives des bras du deuxième interféromètre, qui sont terminés par les réflecteurs de lumière 43 et 48 sont égales.

Lorsque cette position est atteinte, l'émetteur laser 6 est coupé et la diode électroluminescente 4 est désormais utilisée comme source lumineuse pour envoyer un faisceau lumineux dans la fibre 21 du coupleur 20.

Le déplacement de la platine 38 donne enfin naissance à deux interférogrammes qui sont fournis par les photodétecteurs 52 et 54 et dont les fréquences porteuses sont extrêmement voisines.

Le premier de ces deux interférogrammes est détectable dans les meilleurs conditions possibles par corrélation avec le deuxième interférogramme et l'apparition de ce premier interférogramme est parfaitement localisée par comptage de franges dans le deuxième interféromètre (comportant le coupleur optique 20).

On indique ci-après de façon plus précise la manière d'utiliser le système interférométrique représenté sur la figure 1.

On commence par définir une origine par rapport à laquelle la position du dioptre réflecteur du guide 2 sera donnée.

Cette origine correspond à l'extrémité du guide 2, qui est optiquement couplée à la fibre optique 13 du coupleur 10.

Pour ce faire, on fait fonctionner la source incohérente 4, l'émetteur laser 6 étant éteint.

On déplace la platine 36 jusqu'à obtenir l'égalité entre les longueurs optiques des bras du premier interféromètre, qui sont . respectivement terminés le réflecteur 42 et le dioptre réflecteur pris comme origine (extrémité du guide 2).

Pendant ces opérations, la platine 38 est maintenue fixe.

On obtient sur l'oscilloscope 58 (voie 1) un interférogramme dont l'amplitude maximum correspond à l'égalité entre ces longueurs optiques.

Alors, on immobilise la platine 36 dans cette position correspondant à l'égalité des longueurs optiques.

On fait osciller la platine 38.

On actionne le moteur de la platine 36 de manière à amener l'interférogramme obtenu à une position choisie sur l'écran de l'oscilloscope 58.

On arrête alors la platine 36.

On fait fonctionner l'émetteur laser 6.

On déplace la platine 40 jusqu'à obtenir l'égalité des longueurs optiques des bras du deuxième interféromètre, qui sont terminés par le réflecteur 43 et le réflecteur 48.

On détecte ceci grâce au photodétecteur 54 : on obtient, sur l'écran de l'oscilloscope 58, un interférogramme (voie 2).

On fait alors coïncider les maximums respectifs des deux interférogrammes obtenus sur cet écran, en déplaçant la platine 40 sur une longueur permettant cette coïncidence.

On met le compteur de franges 56 à zéro.

On éteint l'émetteur laser 6.

On est alors en mesure de trouver la distance entre le défaut réflecteur du guide 2 et l'origine ainsi définie.

Pour ce faire, on déplace la platine 36 jusqu'à détecter ce défaut réflecteur du guide 2.

Cette détection est réalisée lorsqu'un nouvel interférogramme apparaît sur la voie 1 de l'oscilloscope 58.

On arrête alors la platine 36 (la platine 38 oscillant toujours).

On met en marche l'émetteur laser 6.

On actionne le compteur de franges 56 et on déplace la platine 40 jusqu'à faire coïncider le maximum de l'interférogramme de la voie 2 avec le maximum du nouvel interférogramme de la voie 1.

Alors, on arrête la platine 40.

Or, chaque frange d'interférence est distante d'une frange adjacente d'une longueur égale à la moitié de la longueur d'onde de l'émetteur laser 6.

On est donc capable de déterminer la distance entre l'origine et le défaut réflecteur du guide 2 en multipliant le nombre N des franges d'interférence compté par la moitié de cette longueur d'onde.

Afin de rendre la vitesse d'oscillation de la platine 38 aussi constante que possible, on munit cette platine 38 de moyens de régulation de cette vitesse.

Pour mesurer le déplacement de la platine 38, on utilise avantageusement une méthode optique.

Un telle méthode permet de mesurer des déplacements de l'ordre de 0,1 micromètre suivant la longueur d'onde de la source lumineuse utilisée pour la mise en oeuvre de cette méthode optique.

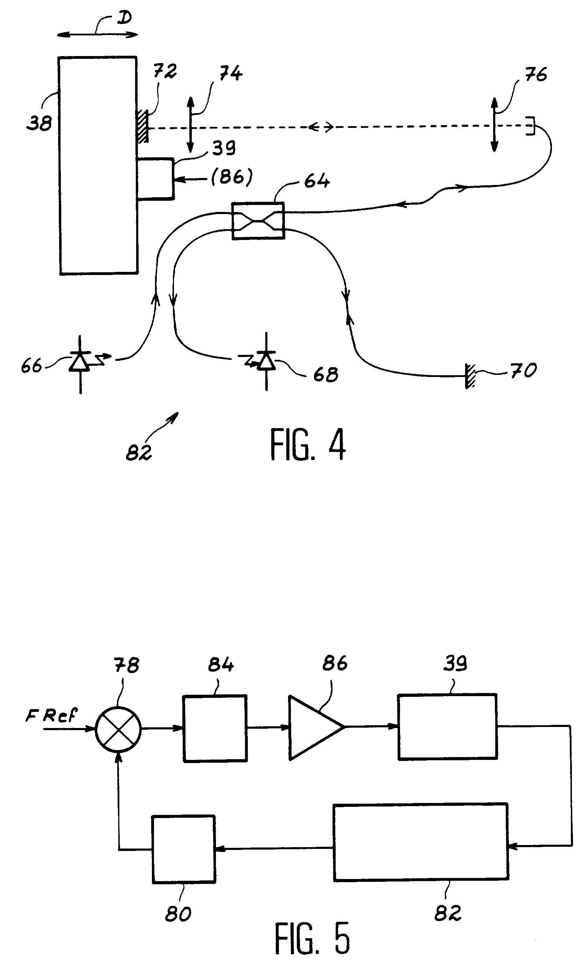

Le principe de cette mesure est schématiquement illustré sur la figure 4.

Cette mesure est réalisée grâce à un autre interféromètre de Michelson 82.

Cet interféromètre comprend encore un coupleur optique 64 de type "2x2" à fibres optiques.

Ce coupleur 64 comprend quatre branches (fibres optiques), la première branche étant couplée à une source lumineuse 66, la deuxième à une photodiode réceptrice 68 et la troisième à un miroir à réflexion totale 70 qui est fixe et qui renvoie dans cette branche la lumière qui en sort.

Un miroir 72 est rigidement solidaire de la platine 38 de sorte qu'il se déplace parallèlement à la direction D.

L'extrémité de la quatrième branche du coupleur 64 est fixe et placée en regard du miroir 72.

Deux optiques 74 et 76 fixes sont placées entre le miroir 72 et l'extrémité de la quatrième branche du coupleur 64.

L'optique 76 est prévue pour transformer un faisceau qui est issu de cette extrémité en un faisceau à rayons parallèles.

L'optique 74 est prévue pour focaliser ce faisceau à rayons parallèles sur le miroir 72 qui le réfléchit pour le renvoyer dans l'extrémité de la quatrième branche du coupleur 64 par l'intermédiaire des optiques 74 et 76.

L'intensité I(t) de la lumière détectée par la photodiode 68 et donc l'intensité du signal électrique fourni par cette photodiode 64 varient comme indiqué ci-après en fonction du temps $\underline{t}$ :

$$I(t) = Io(1 + \cos(4\pi F(t).t/l))$$

où Io est une constante, pi représente le nombre bien connu qui vaut environ 3,14 et $\underline{l}$ représente la longueur d'onde de la source 66.

La fréquence F(t) est une fonction de la vitesse de déplacement de la platine 38 et de la longueur d'onde de la source lumineuse 66.

Pour réaliser la régulation de cette vitesse, il suffit donc de réaliser une régulation de cette fréquence du signal fourni par la photodiode 68.

Il faut utiliser une source lumineuse 66 dont la longueur de cohérence est supérieure à l'amplitude du déplacement de la platine 38, ce déplacement étant de l'ordre de 1 millimètre dans l'exemple décrit.

On choisit par exemple, en tant que source lumineuse 66, une diode laser DFB dont la longueur d'onde est égale à 1550 nanomètres.

Le dispositif d'asservissement de la fréquence du signal fourni par la photodiode 68 est par exemple un dispositif d'asservissement à verrouillage de phase qui est très simple à mettre en oeuvre.

Ce dispositif d'asservissement est schématiquement illustré par la figure 5.

Il comprend un comparateur de phase 78 qui reçoit en entrée une fréquence de consigne Fref ainsi que le signal de sortie d'un Trigger de Schmidt dont l'entrée est reliée à la sortie de la photodiode 68.

Sur la figure 5, le bloc 82 représente l'interféromètre de la figure 4.

Le dispositif d'asservissement de la figure 5 comprend également un intégrateur 84 dont l'entrée reçoit le signal de sortie du comparateur de phase 78 ainsi qu'un amplificateur 86 qui amplifie le signal de sortie de cet intégrateur 84.

Le signal de sortie de l'amplificateur 86 sert à commander les moyens piézo-électriques 39.

Sans asservissement, la variation de la vitesse obtenue avec ces moyens piézo-électriques est de l'ordre de 25 % (la photodiode 68 fournissant alors un signal dont le spectre est relativement large).

Au contraire, l'asservissement décrit permet d'avoir une variation de fréquence inférieure à 1 Hz autour de la fréquence de consigne (par exemple égale à 36 Hz, d'où une vitesse de 28 micromètres par seconde), ce qui correspond à une variation de vitesse inférieure à 2 % (le spectre du signal fourni par la photodiode 68 étant alors très étroit).

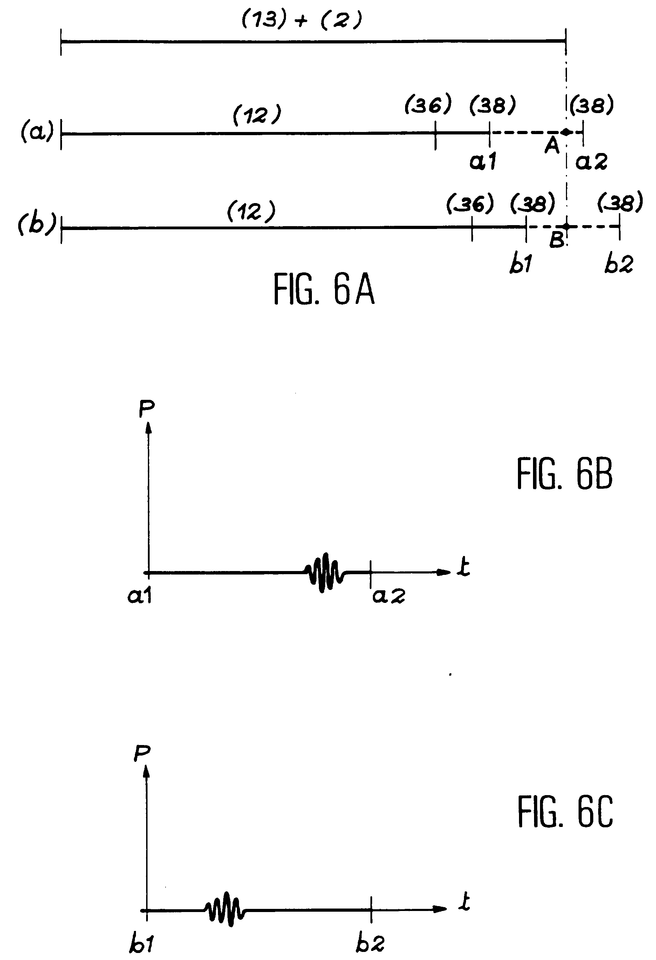

En revenant au système de la figure 1, on montre ci-après que le déplacement d'une platine permet effectivement de déplacer un interférogramme sur l'oscilloscope 58, en faisant référence aux figures 6A à 6C.

La fibre 13 et le guide 2 restent fixes.

Les bras du premier interféromètre de Michelson, qui comprennent respectivement les fibres 12 et 13, ont des longueurs optiques très voisines qui, pour chaque position de la platine 36, sont parfaitement égales pour une position déterminée de la platine 38.

Un oscillogramme est relevé pendant le déplacement de la platine 38 (grâce aux moyens piézo-électriques 39) entre deux positions a1 et a2, pour une position $\underline{a}$ de la platine 36, tandis qu'il est relevé pendant le déplacement de la platine 38 entre deux autres positions b1 et b2, pour une autre position $\underline{b}$ de la platine 36.

On voit sur la figure 6A que les positions A et B correspondant aux interférogrammes obtenus pour les positions $\underline{a}$ et $\underline{b}$ de la platine 36 ne sont pas placés aux mêmes endroits sur leurs segments respectifs a1a2 et b1b2.

D'après la figure 6A, si les oscillogrammes sont déclenchés en a1 et b1, les interférogrammes correspondant respectivement aux positions $\underline{a}$ et $\underline{b}$ de la platine 36 sont observés comme le montrent les figures 6B et 6C où $\underline{t}$ représente le temps et P le photocourant obtenu.

On apporte également les précisions suivantes quant au fonctionnement du système de la figure 1 :

La platine 38 est entraînée, par les moyens piézo-électriques 39, dans un mouvement de translation continu, de vitesse contrôlable grâce au réflecteur 43 (associé à l'optique 47) dont le mouvement est contrôlé, dans l'interféromètre comportant le coupleur 20, à l'aide de l'émetteur laser 6, dont la lumière arrive au coupleur 20 par la fibre 34, ou à l'aide de l'émetteur 4, dont la lumière parvient également au coupleur 20 par le coupleur 30 et la fibre 34.

En effet, la position de la platine 38 peut être parfaitement connue en utilisant l'émetteur laser 6 dans l'interféromètre comportant le coupleur 20 et en comDtant les franaes aui défilent pendant le déplacement de la platine 38, la platine 40 étant maintenue immobile.

Dès que cet interféromètre est équilibré en utilisant l'émetteur 4 couplé grâce à la fibre 34 (les bras de cet interféromètre qui comprennent les fibres 22 et 23 ayant alors la même longueur optique), on ne déplace plus la platine 40 (ni la platine 36) en translation. On déplace la platine 38 en translation grâce aux moyens piézoélectriques 39. Ainsi les photodétecteurs 52 et 54 fournissent des signaux interférogrammes :

- Le photodétecteur 54 fournit un signal de référence.
- Le photodétecteur 52 fournit un signal qui est caractéristique des propriétés de réflexion optique du guide 2, signal qui est à comparer au signal de référence par corrélation, pour obtenir avec précision les propriétés optiques du guide 2.

Par exemple, si ce guide 2 est un miroir "parfait" comme le sont les réflecteurs 42, 43 et 48 (respectivement associés aux optiques 45, 47 et 50), les deux interférogrammes sont parfaitement identiques et superposables.

C'est à partir des différences entre les signaux qu'on localise le dioptre du guide 2 et qu'on mesure son coefficient de réflexion en fonction de la longueur d'onde.

**Revendications**

1. Système interférométrique de détection et de localisation de défauts réflecteurs d'une structure (2) guidant la lumière, ce système étant caractérisé en ce qu'il comprend :

   - une source de lumière incohérente (4),
   - une source laser monomode (6) dont la longueur d'onde est sensiblement égale à la longueur d'onde centrale de la source incohérente,
   - des premier (10) et deuxième (20) coupleurs optiques dont des premières branches respectives (11, 21) sont optiquement couplées à la source incohérente et à la source laser,
   - un premier support (36) qui est déplaçable en translation suivant une direction donnée et auquel sont fixées les extrémités de deuxièmes branches (12, 22) des premier et deuxième coupleurs,
   - un deuxième support (38) apte à osciller suivant la direction donnée,
   - des premier (42) et deuxième (43) réflecteurs de lumière fixés au deuxième support (38) et placés respectivement en regard des extrémités des deuxièmes branches (12, 22) des premier et deuxième coupleurs pour y renvoyer la lumière qui en sort,
   - un troisième support (40) qui est déplaçable en translation suivant la direction donnée et auquel est fixée l'extrémité d'une troisième branche (23) du deuxième coupleur (20),
   - un troisième réflecteur de lumière (48) qui est fixe et placé en regard de cette extrémité de la troisième branche (23) du deuxième coupleur (20) pour y renvoyer la lumière qui en sort, une troisième branche (13) du premier coupleur (10) étant optiquement couplée à la structure guidante (2),
   - des premier (52) et deuxième (54) photodétecteurs qui sont respectivement couplés optiquement à des quatrième branches (14, 24) des premier (10) et deuxième (20) coupleurs,
   - un compteur de f ranges d'interférences (56) dont l'entrée reçoit les signaux fournis par le deuxième photodétecteur (54), et
   - des moyens (58) d'analyse des signaux fournis par les premier et deuxième photodétecteurs (52, 54), ces moyens d'analyse étant prévus pour localiser les défauts réflecteurs de la structure guidante (2), à l'aide de déplacements appropriés des premier, deuxième et troisième supports et du compteur.

2. Système selon la revendication 1, caractérisé en ce qu'il comprend en outre un troisième coupleur optique (30) dont des première (31) et deuxième (32) branches sont respectivement couplées optiquement à la source incohérente (4) et à la source-laser (6) et dont des troisième (3) et quatrième (34) branches sont respectivement couplées optiquement aux premières branches (11, 21) des premier (10) et deuxième (20) coupleurs.

3. Système selon l'une quelconque des revendications 1 et 2, caractérisé en ce que les moyens d'analyse comprennent un oscilloscope (58) à deux voies qui reçoivent respectivement les signaux fournis par les premier (52) et deuxième (54) photodétecteurs, cet oscilloscope étant prévu pour afficher les interférogrammes correspondant à ces signaux.

4. Système selon l'une quelconque des revendications 1 à 3, caractérisé en ce qu'il comprend en outre des moyens piézoélectriques (39) qui sont aptes à faire osciller le deuxième support (38) suivant la direction donnée.

5. Système selon la revendication 4, caractérisé en ce qu'il comprend en outre des moyens (66, 68, 70, 72, 78, 80, 84, 86) de régulation de la vitesse du déplacement du deuxième support (38), ces moyens de régulation étant prévus pour imposer une vitesse de déplacement constante au deuxième support.

6. Système selon la revendication 5, caractérisé en ce que les moyens de régulation comprennent :

   - un interféromètre de Michelson comportant :

     . une source lumineuse (66) dont la longueur de cohérence est supérieure à l'amplitude du déplacement du deuxième support (38),
     . deux bras respectivement terminés par deux réflecteurs de lumière (70, 72) dont l'un (72) est rendu rigidement solidaire du deuxième support (38), et

. un troisième photodétecteur (68), et

- des moyens de commande (78, 80, 84, 86) des moyens piézoélectriques (39) en fonction du signal fourni par ce troisième photodétecteur (68), ces moyens de commande étant prévus pour imposer la vitesse de déplacement constante au deuxième support par l'intermédiaire des moyens piézoélectriques.

## Claims

1. Interferometric system for the detection and location of reflecting faults of light guidance structures (2), said system being characterized in that it comprises :

    - an incoherent light source (4),
    - a monomode laser source 96), whose wavelength is substantially equal to the central wavelength of the incoherent source,
    - first (10) and second (20) optical couplers, whose first respective branches (11, 21) are optically coupled to the incoherent source and to the laser source,
    - a first support (36) displaceable in translation in a given direction and to which are fixed the ends of the second branches (12, 22) of the first and second couplers,
    - a second support (38) able to oscillate in a given direction,
    - first (42) and second (43) light reflectors fixed to the second support (38) and respectively placed facing the ends of the second branches (12, 22) of the first and second couplers in order to reflect there the light passing out of the same,
    - a third support (40) displaceable in translation in the given direction and to which is fixed the end of a third branch (23) of the second coupler (20),
    - a third light reflector (48) fixed and positioned facing said end of the third branch (23) of the second coupler (20) in order to reflect there the light passing out of the same, a third branch (13) of the first coupler (10) being optically coupled to the guiding structure (2),
    - first (52) and second (54) photodetectors respectively optically coupled to fourth branches (14, 24) of the first (10) and second (20) couplers,
    - an interference fringe counter (56), whose input receives the signals supplied by the second photodetector (54) and
    - means (58) for analyzing signals supplied by the first and second photodetectors (52, 54), said analysis means serving to locate the reflecting faults of the guidance structure (2), with the aid of appropriate displacements of the first, second and third supports and the counter.

2. System according to claim 1, characterized in that it also comprises a third optical coupler (30), whose first (31) and second (32) branches are respectively optically coupled to the incoherent source (4) and to the laser source (6) and whose third (33) and fourth (34) branches are respectively optically coupled to the first branches (11, 21) of the first (10) and second (20) couplers.

3. System according to either of the claims 1 and 2, characterized in that the analysis means comprise a two-channel oscilloscope (58) respectively receiving the signals supplied by the first (52) and second (54) photodetectors, said oscilloscope displaying the interferograms corresponding to these signals.

4. System according to any one of the claims 1 to 3, characterized in that it also comprises piezoelectric means (39) able to oscillate the second support (38) in the given direction.

5. System according to claim 4, characterized in that it also comprises means (66, 68, 70, 72, 78, 80, 84, 86) for regulating the displacement speed of the second support (38), said regulating means imposing a constant displacement speed on the second support.

6. System according to claim 5, characterized in that the regulating means comprise a Michelson interferometer having a light source (66), whose coherence length is greater than the amplitude of the displacement of the second support (38), two arms respectively terminated by two light reflectors (70, 72), whereof one (72) is rendered rigidly integral with the second support (38) and a third photodetector (68), as well as means (78, 80, 84, 86) for controlling the piezoelectric means (39) as a function of the signals supplied by said third photodetector (68), said control means imposing the constant displacement speed on the second support via piezoelectric means.

## Patentansprüche

1. System zur interferometrischen Detektion und Lokalisierung von reflektierenden Defekten einer Lichtleiterstruktur (2), wobei dieses System **dadurch gekennzeichnet** ist, daß es umfaßt:

- eine Quelle inkohärenten Lichts (4),
- eine Monomode-Laserquelle (6), deren Wellenlänge im wesentlichen gleich der zentralen Wellenlänge der inkohärenten Quelle ist,
- einen ersten (10) und zweiten (20) Optokoppler, von denen jeweils erste Zweige (11, 21) optisch gekoppelt sind mit der inkohärenten Quelle und mit der Laserquelle,
- einen ersten Halter (36), der parallelverschiebbar ist in einer gegebenen Richtung und an dem die Enden von zweiten Zweigen (12, 22) des ersten und zweiten Kopplers befestigt sind,
- einen zweiten Halter (38), der in der gegebenen Richtung schwingen kann,
- einen ersten (42) und zweiten (43) Lichtreflektor, befestigt am zweiten Halter (38) und jeweils den Enden der zweiten Zweige (12, 22) des ersten und zweiten Kopplers gegenüberstehend angebracht, um das daraus austretende Licht dorthin zurückzusenden,
- einen dritten Halter (40), der in der gegebenen Richtung parallelverschiebbar ist und an dem das Ende eines dritten Zweigs (23) des zweiten Kopplers (20) befestigt ist,
- einen dritten Lichtreflektor (48), der diesem Ende des dritten Zweigs (23) des zweiten Kopplers (20) gegenüberstehend angeordnet ist, um das daraus austretende Licht dorthin zurückzusenden, wobei ein dritter Zweig (13) des ersten Kopplers (10) optisch gekoppelt ist mit der Leiterstruktur (2),
- einen ersten (52) und zweiten (54) Photodetektor, die jeweils optisch gekoppelt sind mit vierten Zweigen (14, 24) des ersten (10) und zweiten (20) Kopplers,
- einen Interferenzstreifenzähler (56), dessen Eingang die durch den zweiten Photodetektor (54) gelieferten Signale empfängt, und
- Einrichtungen (58) zum Analysieren der durch den ersten und zweiten Photodetektor (52, 54) gelieferten Signale, wobei diese Analyseeinrichtungen vorgesehen sind, um die reflektierenden Defekte der Leiterstruktur (2) zu lokalisieren mittels entsprechender Verschiebungen des ersten, zweiten und dritten Halters und des Zählers.

2. System nach Anspruch 1, dadurch gekennzeichnet, daß es außerdem einen dritten Optokoppler (30) umfaßt, dessen erster (31) und zweiter (32) Zweig jeweils mit der inkohärenten Quelle (4) und der Laserquelle (6) optisch gekoppelt sind und wovon ein dritter (3) und vierter (34) Zweig jeweils mit den ersten Zweigen (11, 21) des ersten (10) und zweiten (20) Kopplers optisch gekoppelt sind.

3. System nach einem der Ansprüche 1 und 2, dadurch gekennzeichnet, daß die Analyseeinrichtungen ein Oszilloskop (58) mit zwei Kanälen umfaßt, die jeweils die durch den ersten (52) und zweiten (54) Photodetektor gelieferten Signale empfangen, wobei dieses Oszilloskop vorgesehen ist, die diesen Signalen entsprechenden Interferogramme anzuzeigen.

4. System nach einem der Ansprüche 1 bis 3, dadurch gekennzeichnet, daß es außerdem piezoelektrische Einrichtungen (39) umfaßt, die den zweiten Halter (38) in Schwingung versetzen können in der gegebenen Richtung.

5. System nach Anspruch 4, dadurch gekennzeichnet, daß es außerdem Regelungseinrichtungen (66, 68, 70, 72, 78, 80, 84, 86) der Verschiebungsgeschwindigkeit des zweiten Halters (38) umfaßt, wobei diese Regelungseinrichtungen vorgesehen sind, dem zweiten Halter eine konstante Verschiebungsgeschwindigkeit zu verleihen.

6. System nach Anspruch 5, dadurch gekennzeichnet, daß die Regelungseinrichtungen umfassen:

- ein Michelson-Interferometer, enthaltend:

  . eine Lichtquelle (66), deren Kohärenzlänge größer ist als der Verschiebungsausschlag des zweiten Halters (38),
  . zwei Arme bzw. Zweige, jeweils endend durch zwei Lichtreflektoren (70, 72), von denen einer (72) starr festgemacht ist am zweiten Halter (38), und
  . einen dritten Photodetektor (68), und

- Einrichtungen (78, 80, 84, 86) zum Steuern der piezoelektrischen Einrichtungen (39) in Abhängigkeit von dem durch diesen dritten Photodetektor (68) gelieferten Signal, wobei diese Steuereinrichtungen vorgesehen sind, dem zweiten Halter mit Hilfe der piezoelektischen Einrichtungen die konstante Verschiebungsgeschwindigkeit zu verleihen.

FIG. 1

FIG. 2

FIG. 3

FIG. 4

FIG. 5

$(13) + (2)$

(a)

$(12)$    $(36)$ $(38)$   $(38)$

a1    A   a2

(b)

$(12)$    $(36)$ $(38)$   $(38)$

b1    B   b2

FIG. 6A

P

a1     a2

t

FIG. 6B

P

b1     b2

t

FIG. 6C

13